# EUROPÄISCHE PATENTSCHRIFT

(11) **EP 1 698 030 B1**
(45) Veröffentlichungstag und Bekanntmachung des Hinweises auf die Patenterteilung: **07.11.2007**
(21) Anmeldenummer: 03819141.7
(22) Anmeldetag: 24.12.2003
(51) Int. Cl.: H02G 1/00, H02G 1/14, H02G 7/00

(54) **VERFAHREN ZUM SPLEISSEN SUSPENDIERTER HOCHSPANNUNGSSEILE**
METHOD FOR SPLICING SUSPENDED HIGH VOLTAGE CABLES
PROCEDE D'EPISSURE DE CABLES HAUTE TENSION SUSPENDUS

(43) Veröffentlichungstag der Anmeldung: 06.09.2006
(73) Patentinhaber: Alpine-Energie Deutschland GmbH, 88400 Bilberach (DE)
(72) Erfinder: PIDNER, Otto, A-9900 Lienz (AT); ANTONI, Johannes, 85643 Steinhöring (DE); GÄRTNER, Carsten, 33739 Bielefeld (DE)
(74) Vertreter: Kiessling, Christian
(86) Internationale Anmeldenummer: PCT/DE2003/004264
(87) Internationale Veröffentlichungsnummer: WO 2005/062435

(56) Entgegenhaltungen:
- US-A- 4 416 061
- US-A- 4 512 828
- US-A- 4 817 682
- US-A1- 2003 019 099

## Beschreibung

Die Erfindung betrifft ein Verfahren zum Verbinden der Seilenden von an Hochspannungsmasten bzw. Abspannmasten suspendierten Hochspannungsseilen, bei dem miteinander zu verbindende Seilenden mittels einer Spleißeinrichtung nicht-lösbar miteinander zu verbinden sind.

Verfahren der eingangs genannten Art werden im Stand der Technik verwendet, um Hochspannungsseile, die von Rolltrommeln abgewickelt werden und mittels leichter Hilfsseile an Hochspannungsmasten befestigt werden, in abgespanntem Zustand am Boden liegend miteinander zu verbinden. Die bekannten Verfahren weisen jedoch den Nachteil auf, dass der insgesamte Vorgang eines Bespannens von Hochspannungsseilen auf Hochspannungsmasten sehr zeit- und arbeitsintensiv ist, wobei aufgrund einer notwendigen Durchführung des Verfahrens am Boden mitunter Flurschäden von nicht unerheblichem Ausmaß entstehen.

Bei einem Vorgang des Aufspannen eines Seilzuges, wird grundsätzlich eingeleitet, indem an den Masten oben Laufräder angehängt werden, über die dann ein Vorseil gezogen wird, zuerst beispielsweise ein Perlonseil, danach beispielsweise ein Stahlseil, dann das Hauptseil bzw. Phasenseil, dessen Spleißen Gegenstand des erfindungsgemäßen Verfahrens ist. Das Stahlseil hat mehr Zugkraft als das Vorseil, jedoch ist das Vorseil leichter durch die Laufräder zu ziehen und hat ausreichend Zugkraft, um das Stahlseil zu ziehen und mit Hilfe des Stahlseils wird dann das vergleichsweise schwere Phasenseil gezogen.

Die Seile werden grundsätzlich von einer Rolltrommel abgerollt, so dass immer nur eine gewisse Länge an Seil, hier insbesondere an Phasenseil, von einer Rolltrommel zur Verfügung steht. Die Rolltrommel steht unten am Boden, und das Seil wird an einen Mast hochgeführt und wird dann über die einzelnen Laufräder von Mast zu Mast geführt.

Auf eine Rolltrommel können etwa 3000 m Phasenseil aufgespannt werden, wobei diese Länge abhängig von der Dicke des Phasenseils ist. Das Phasenseil wird von einem Abspannmast zu einem folgenden Abspannmast gezogen. Zwischen den Abspannmasten sind Tragmaste angeordnet. Die Stabilität eines Abspannmastes ist ausgelegt, um der Zugkraft eines Seiles standzuhalten, und sie sind ausgelegt, um einer Richtungsänderung in der Seilführung zwischen zwei benachbarten Abspannmasten standzuhalten. Demgegenüber ist die Stabilität eines Tragmastes ausgelegt, um das Gewicht der Seile plus Wind- und Eislasten zu tragen.

Der US 2003/0019 099 ist der nächstliegende Stand der Technik zu entnehmen.

Aufgabe der Erfindung ist, ein Verfahren zum Spleißen der Seilenden von miteinander zu verbindenden Hochspannungsseilen zu schaffen, bei dem sowohl der Arbeitsaufwand als auch der Zeitaufwand gegenüber den bekannten Verfahren deutlich reduziert sind.

Die Lösung besteht in der im kennzeichnenden Teil des Anspruchs 1 erfaßten Merkmalskombination.

Für ein Verfahren der eingangs genannten Art wird diese Aufgabe dadurch gelöst, dass zwei über eine provisorische Verbindungseinrichtung miteinander verbundene Seilenden in einen unmittelbar an eine Stirnfläche eines Seilendes angrenzenden Spleißbereich zum Anbringen einer Spleißeinrichtung und einen dem Spleißbereich benachbarten Halterungsbereich zum Anbringen einer Halterungseinrichtung unterteilt werden, wobei in einem ersten Schritt zwei einander zugeordnete Halterungseinrichtungen über eine Spanneinrichtung miteinander verbunden werden, in einem zweiten Schritt an den Halterungsbereich eines jeweiligen Seilenden je eine der miteinander verbundenen Halterungseinrichtung befestigt wird, in einem dritten Schritt die provisorische Verbindungseinrichtung durch ein Spannen der Spanneinrichtung auf ein vorherbestimmtes Maß entlastet wird, in einem Vierten Schritt die provisorische Verbindungseinrichtung gelöst und von den Seilenden entfernt wird, in einem fünften Schritt der Abstand der sich gegenüberstehenden beiden Seilenden durch ein weiteres Spannen der Spanneinrichtung auf ein vorherbestimmtes Maß reduziert wird und in einem sechsten Schritt durch Anbringen einer Spleißeinrichtung an den jeweiligen Spleißbereichen die Seilenden miteinander verspleißt werden.

Bevorzugte Ausführungsformen der Erfindung sind Gegenstand der Unteransprüche.

Bei der erfindungsgemäßen Verfahren wird durch die Merkmalskombination, dass zwei über eine provisorische Verbindungseinrichtung miteinander verbundene Seilenden in einen unmittelbar an eine Stirnfläche eines Seilendes angrenzenden Spleißbereich zum Anbringen einer Spleißeinrichtung und einen dem Spleißbereich benachbarten Halterungsbereich zum Anbringen einer Halterungseinrichtung unterteilt werden, wobei in einem ersten Schritt zwei einander zugeordnete Halterungseinrichtungen über eine Spanneinrichtung miteinander verbunden werden, in einem zweiten Schritt an den Halterungsbereich eines jeweiligen Seilenden je eine der miteinander verbundenen Halterungseinrichtung befestigt wird, in einem dritten Schritt die provisorische Verbindungseinrichtung durch ein Spannen der Spanneinrichtung auf ein vorherbestimmtes Maß entlastet wird, in einem Vierten Schritt die provisorische Verbindungseinrichtung gelöst und von den Seilenden entfernt wird, in einem fünften Schritt der Abstand der sich gegenüberstehenden beiden Seilenden durch ein weiteres Spannen der Spanneinrichtung auf ein vorherbestimmtes Maß reduziert wird und in einem sechsten Schritt durch Anbringen einer Spleißeinrichtung an den jeweiligen Spleißbereichen die Seilenden miteinander verspleißt werden, erreicht, dass ein Verfahren geschaffen ist, bei dem aufgrund eines Vorsehens jeweils einer provisorischen Verbindung zwischen einer Mehrzahl abgelängter Hochspannungsseile ein Aufspannen auf eine Mehrzahl hintereinander angeordneter Hochspannungsmasten ermöglicht ist, und wobei ein Spleißvorgang an den provisorischen Verbindungen der suspendierten Hochspannungsseile nach einem Entlasten und anschließenden Entfernen der provisorischen Verbindung auch an zugbeaufschlagten Enden von Hochspannungsleitungen und damit beispielsweise von einer aufgehängten Arbeitsplattform aus durchführbar ist.

Gemäß einer ersten bevorzugten Ausführungsform der erfindungsgemäßen Vorrichtung ist vorgesehen, dass das als Hochspannungsseil ein Phasenseil mit einem von einem Mantel aus verdrehten Aluminiumseilen umgebener Kern aus verdrehten Stahlseilen vorgesehen ist. Dadurch ist eine besonders gute Verpressbarkeit des Hochspannungsseils sichergestellt.

Gemäß einer anderen bevorzugten Ausführungsform der erfindungsgemäßen Vorrichtung ist vorgesehen, dass das als Spleißeinrichtung ein Pressverbinder vorgesehen ist. Damit ist eine besonders gute Verpressung des Hochspannungsseils sichergestellt.

Gemäß einer weiteren bevorzugten Ausführungsform der erfindungsgemäßen Vorrichtung ist vorgesehen, dass das als provisorische Verbindungseinrichtung ein aus einem Metallgeflecht hergestellter Ziehstrumpf vorgesehen ist. Ein Ziehstrumpf weist einen Durchmesser auf, der nur unwesentlich größer als der Durchmesser eines Hochspannungsseiles ausfällt. Deshalb ist ein aus einer Mehrzahl abgelängter Hochspannungsseilabschnitten zusammengesetztes, mittels Ziehstrümpfen zusammengefügtes Hochspannungsseil im wesentlichen wie ein entsprechend einstückiges Hochspannungsseil handhabbar. Dies ist insbesondere bei einem Bespannen von Hochspannungsmasten von Vorteil.

Gemäß einer weiteren bevorzugten Ausführungsform der erfindungsgemäßen Vorrichtung ist vorgesehen, dass das als Halterungseinrichtung eine einen Teil des Halterungsbereiches eines Seilendes umfassende Arbeitsklemme vorgesehen ist. Zwei Arbeitsklemmen sind dabei mittels einer Kette miteinander verbunden, wobei als Spanneinrichtung für die kette vorzugsweise ein Kettengreifzug (BKS) vorgesehen ist.

Bei dem erfindungsgemäßen Verfahren ist das suspendierte Hochspannungsseil insbesondere zugbelastet und dabei freischwebend. Der Vorgang des Spleißens wird dabei vorzugsweise in situ in der Nachbarschaft des aufgehängten Seils von einem an zwei weiteren Seilen getragenen Wagen als Arbeitsplattform aus durchgeführt.

Die den Spleißvorgang durchführenden Personen in dem Wagen sind aufgrund gesetzlicher Sicherheitsbestimmungen jeweils mittels einer an ihrem Körper befestigten Sicherungsleine gesichert, deren körperfernes Ende an einer entlang einem der beiden weiteren Seile beweglichen Rolleneinrichtung befestigt ist.

Das erfindungsgemäße Verfahren wird im folgenden anhand einer bevorzugten Ausführungsform erläutert, die in den Figuren der Zeichnung dargestellt ist. Darin zeigen:
- Fig. 1: zwei Seilenden, die gemäß dem erfindungsgemäßen Verfahren miteinander zu verspleißen sind, in einer Ansicht von oben;
- Fig. 2: eine bevorzugte Ausführungsform einer bei dem erfindungsgemäßen Verfahren verwendeten Fixiereinrichtung, nämlich ein Pressverbinder, in einer Ansicht von schräg oben;
- Fig. 3: eine bevorzugte Ausführungsform einer bei dem erfindungsgemäßen Verfahren verwendeten Verbindungseinrichtung, nämlich ein Ziehstrumpf, in einer Ansicht von schräg oben; (Bild 3)
- Fig. 4: eine bevorzugte Ausführungsform einer bei dem erfindungsgemäßen Verfahren verwendeten Halterungseinrichtung, nämlich ein3 Arbeits klemme, in einer Ansicht von schräg oben; (Bild 2)

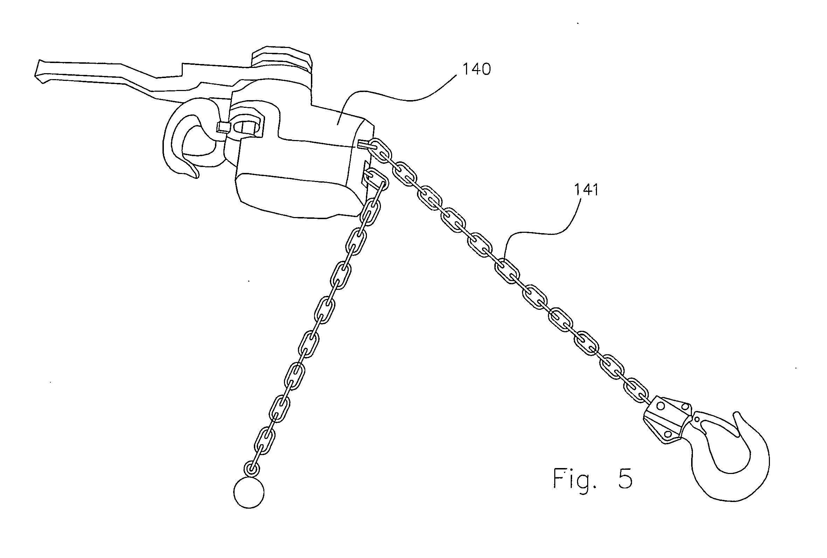

- Fig. 5: eine bevorzugte Ausführungsform einer bei dem erfindungsgemäßen Verfahren verwendeten Spanneinrichtung, nämlich ein Kettengreif zug, in einer Ansicht von schräg oben. (Bild 1)

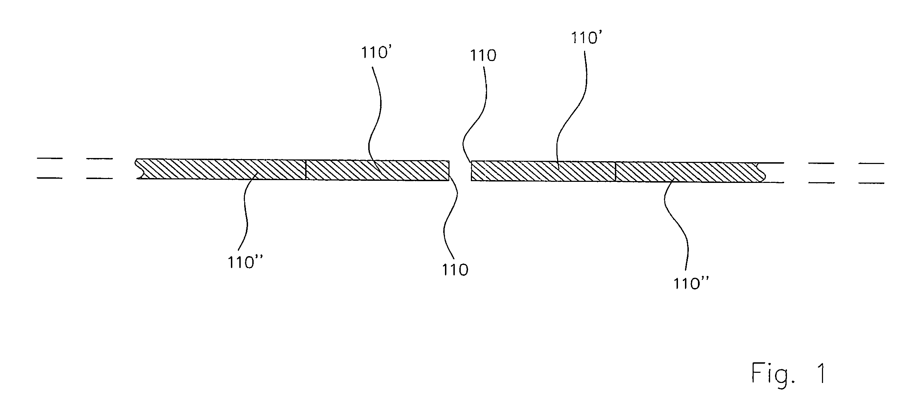

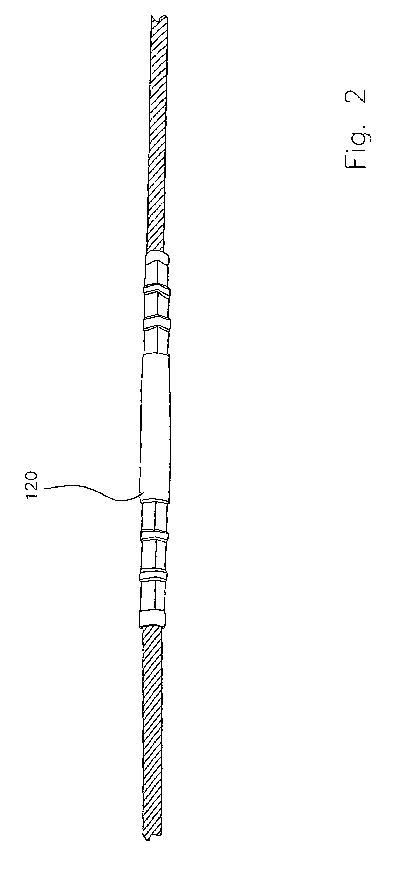

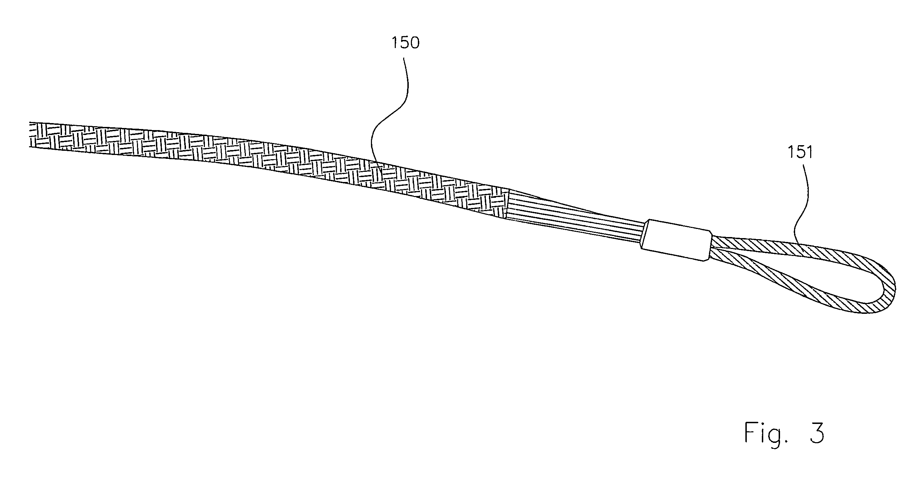

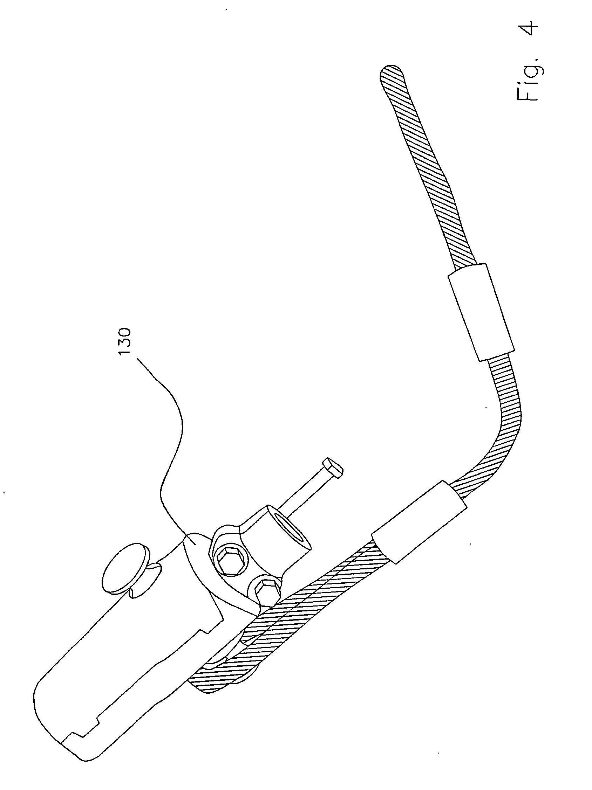

Bei dem erfindungsgemäßen Verfahren zum Verbinden der Seilenden 110 von an Abspannmasten suspendierten Hochspannungsseilen, bei dem miteinander zu verbindende Seilenden 110 mittels einer Spleißeinrichtung nicht-lösbar miteinander zu verbinden sind und zu dessen Durchführung die in den Figuren 1 bis 4 dargestellten Einrichtungen Verwendung finden, werden vorab zwei über eine provisorische Verbindungseinrichtung miteinander verbundene Seilenden 110 in einen unmittelbar an eine Stirnfläche eines Seilendes 110 angrenzenden Spleißbereich 110' zum Anbringen einer Spleißeinrichtung und einen dem Spleißbereich benachbarten Halterungsbereich 110" zum Anbringen einer Halterungseinrichtung unterteilt. Anschließend werden erfindungswesentlich in einem ersten Schritt zwei einander zugeordnete Halterungseinrichtungen über eine Spanneinrichtung miteinander verbunden, in einem zweiten Schritt wird an den Halterungsbereich 110" eines jeweiligen Seilendes 110 je eine der miteinander verbundenen Halterungseinrichtung befestigt, in einem dritten Schritt wird die provisorische Verbindungseinrichtung durch ein Spannen der Spanneinrichtung auf ein vorherbestimmtes Maß entlastet, in einem Vierten Schritt wird die provisorische Verbindungseinrichtung gelöst und von den Seilenden 110 entfernt, in einem fünften Schritt wird der Abstand der sich gegenüberstehenden beiden Seilenden 110 durch ein weiteres Spannen der Spanneinrichtung auf ein vorherbestimmtes Maß reduziert und in einem sechsten Schritt werden durch Anbringen einer Spleißeinrichtung an den jeweiligen Spleißbereichen 110' die Seilenden 110 miteinander verspleißt.

Bei dem Verfahren ist als Hochspannungsseil ein Phasenseil mit einem von einem Mantel aus verdrehten Aluminiumseilen umgebener Kern aus verdrehten Stahlseilen vorgesehen. Des weiteren ist als Spleißeinrichtung ein Pressverbinder 120 vorgesehen und als provisorische Verbindungseinrichtung ist ein aus einem Metallgeflecht hergestellter Ziehstrumpf 150 vorgesehen. Als Halterungseinrichtung ist eine einen Teil des Halterungsbereiches 110" eines Seilendes 110 umfassende Arbeitsklemme 130 vorgesehen, wobei als Spanneinrichtung ein Kettengreifzug 140 (BKS) vorgesehen ist.

Am Anfang des Verfahrens werden zwei Seilenden 110 mittels eines Doppelziehstrumpfes miteinander verbunden. Anschließend wird nicht am Boden sondern in situ an jedes Seilende 110 eine Arbeitsklemme 130 angesetzt, wobei die beiden Arbeitsklemmen 130 über eine Kette 141 miteinander verbunden sind. Die Kette 141 wird anschließend mittels eines Kettengreifzuges 141 (BKS), soweit gespannt, bis eine kraftschlüssige Verbindung zwischen den Seilenden 110 hergestellt ist. Ein anschließendes Entfernen der Ziehstrümpfe 150 ist dadurch ermöglicht. Danach werden die Seilenden 110 mit Hilfe eines Pressverbinders 120 fest miteinander verbunden.

Das suspendierte Hochspannungsseil ist während der gesamten Durchführung des Verfahrens zugbelastet und freischwebend, wobei der Vorgang des Spleißens in situ in der Nachbarschaft des aufgehängten Seils von einem an zwei weiteren Seilen getragenen Wagen aus durchgeführt wird.

Ein Phasenseil besteht aus einem Stahlkern und einem Aluminiummantel, wobei sowohl der Stahlkern als auch der Aluminiummantel aus gedrehten Einzelseilen zusammengesetzt sind. Beim Vorgang des Anbringens eines Pressverbinders 120, dessen Seilseitige Kontaktfläche als hohlzylindrischer Mantel ausgebildet ist, und in den die betreffenden beiderseitigen Seilenden 110 eingeführt werden, werden sowohl die Einzelseile des Stahlkerns als auch die Einzelseile des Aluminiummantels bei einem Pressvorgang zu einer homogenen Masse verpresst, wobei an den Pressstellen eine nicht lösbare Verbindung zwischen dem Pressverbinder 120 und den betreffenden Seilenden 110 hergestellt wird.

Ein Ziehstrumpf 150 ermöglicht ein einfaches Einführen eines Seilendes 110 an seinem offenen Ende, zieht sich jedoch bei Zug auf das Seilende 110 zusammen, mindert also seinen Durchmesser, wodurch eine radiale Kraft in Richtung auf einen Seilmittelpunkt zu ausgeübt wird, wodurch ein Abstreifen des Ziehstrumpfes 150 von dem Seilende 110 verhindert ist. Ein Ziehstrumpf 150 ist von einem Seilende 110, dass in ihn eingeführt worden ist, zu lösen, indem der Ziehstrumpf 150 in seiner Längsrichtung zusammengedrückt wird, er also in seiner Längsrichtung komprimiert wird, wobei er sich radial ausdehnt und einen größeren Durchmesser annimmt, so dass ein betreffendes eingeschlossenes Seilende 110 dann einfach entfernbar ist.

Zwei einander zugeordnete Ziehstrümpfe 150 bilden einen Doppelziehstrumpf. Ein einzelner Ziehstrumpf 150 weist an seinem Seilfernen Ende eine Schlaufe 151 auf, wobei die jeweiligen Schlaufen eines Doppelziehstrumpfes bei einem Verbinden zweier Seilenden 110 miteinander verbunden werden.

Die den Spleißvorgang durchführenden Personen sind in dem Wagen jeweils mittels einer an ihrem Körper befestigten Sicherungsleine gesichert, deren körperfernes Ende an einer entlang einem der beiden weiteren Seile beweglichen Rolleneinrichtung befestigt ist. Die Personensicherung erfolgt insbesondere über ein weiteres Tragseil, an dem eine Rolle angebracht ist, wobei an dieser Rolle ein Sicherungsseil befestigt ist, durch das eine Einzelperson bzw. jede einzelne Person, die sich in dem betreffenden Wagen aufhält, gesichert ist. Eine Person trägt dabei beispielsweise eine herkömmliche Sicherungsweste bzw. einen herkömmlichen Sicherungsgurt, an dem das rollenferne Ende des Sicherungsseiles befestigt ist.

Das oben erläuterte Ausführungsbeispiel der Erfindung dient lediglich dem Zweck eines besseren Verständnisses der durch die Ansprüche definierten erfindungsgemäßen Lehre, die als solche durch das Ausführungsbeispiel nicht eingeschränkt ist.

## Patentansprüche

1. Verfahren zum Verbinden der Seilenden (110) von an Abspannmasten suspendierten Hochspannungsseilen, bei dem miteinander zu verbindende Seilenden (110) mittels einer Spleißeinrichtung nicht-lösbar miteinander zu verbinden sind, wobei zwei über eine provisorische Verbindungseinrichtung miteinander verbundene Seilenden (110) in einen unmittelbar an eine Stirnfläche eines Seilendes (110) angrenzenden Spleißbereich (110') zum Anbringen einer Spleißeinrichtung und einen dem Spleißbereich benachbarten Halterungsbereich (110") zum Anbringen einer Halterungseinrichtung unterteilt werden, **dadurch gekennzeichnet, dass** in einem ersten Schritt zwei einander zugeordnete Halterungseinrichtungen über eine Spanneinrichtung miteinander verbunden werden, in einem zweiten Schritt an den Halterungsbereich (110'') eines jeweiligen Seilenden (110) je eine der miteinander verbundenen Halterungseinrichtung befestigt wird, in einem dritten Schritt die provisorische Verbindungseinrichtung durch ein Spannen der Spanneinrichtung auf ein vorherbestimmtes Maß entlastet wird, in einem vierten Schritt die provisorische Verbindungseinrichtung gelöst und von den Seilenden (110) entfernt wird, in einem fünften Schritt der Abstand der sich gegenüberstehenden beiden Seilenden (110) durch ein weiteres Spannen der Spanneinrichtung auf ein vorherbestimmtes Maß reduziert wird und in einem sechsten Schritt durch Anbringen einer Spleißeinrichtung an den jeweiligen Spleißbereichen (110') die Seilenden (110) miteinander verspleißt werden.

2. Verfahren nach Anspruch 1, **dadurch gekennzeichnet, dass** das als Hochspannungsseil ein Phasenseil mit einem von einem Mantel aus verdrehten Aluminiumseilen umgebener Kern aus verdrehten Stahlseilen vorgesehen ist.

3. Verfahren nach einem der vorhergehenden Ansprüche, **dadurch gekennzeichnet, dass** als Spleißeinrichtung ein Pressverbinder (120) vorgesehen ist.

4. Verfahren nach einem oder mehr der vorhergehenden Ansprüche, **dadurch gekennzeichnet, dass** als provisorische Verbindungseinrichtung ein aus einem Metallgeflecht hergestellter Ziehstrumpf (150) vorgesehen ist.

5. Verfahren nach einem oder mehr der vorhergehenden Ansprüche, **dadurch gekennzeichnet, dass** als Halterungseinrichtung eine einen Teil des Halterungsbereiches (110'') eines Seilendes (110) umfassende Arbeitsklemme (130) vorgesehen ist.

6. Verfahren nach einem oder mehr der vorhergehenden Ansprüche, **dadurch gekennzeichnet, dass** als Spanneinrichtung ein Kettengreifzug (140) (BKS) vorgesehen ist.

7. Verfahren nach einem oder mehr der vorhergehenden Ansprüche, **dadurch gekennzeichnet, dass** das suspendierte Hochspannungsseil zugbelastet und freischwebend ist.

8. Verfahren nach Anspruch 7, **dadurch gekennzeichnet, dass** der Vorgang des Spleißens in situ in der Nachbarschaft des aufgehängten Seils von einem an zwei weiteren Seilen getragenen Wagen aus durchgeführt wird.

9. Verfahren nach Anspruch 8, **dadurch gekennzeichnet, dass** die den Spleißvorgang durchführenden Personen in dem Wagen jeweils mittels einer an ihrem Körper befestigten Sicherungsleine gesichert sind, deren körperfernes Ende an einer entlang einem der beiden weiteren Seile beweglichen Rolleneinrichtung befestigt ist.

## Claims

1. A method for connecting the ends (110) of high-tension cables suspended from pylons or span poles, wherein the cable ends (110) intended to be connected to each other are to be non-detachably interconnected by means of a splicing device, and wherein two cable ends (110) connected to each other by means of a temporary connecting device are divided into a splicing region (110') directly adjoining an end face of a cable for the attachment of a splicing device and a fastening region (110") adjacent to said splicing region for the attachment of a fastening device, **characterized in that** two fastening devices assigned to each other are connected to each other by means of a clamping device in a first step, each of the connected fastening devices is attached to the respective fastening region (110") of a respective cable end (110) in a second step, the temporary connecting device is loosened by tightening the tightening device to a predefined extent in a third step, the temporary connecting device is released and removed from the cable ends (110) in a fourth step, the distance between the two opposing cable ends (110) is reduced by additionally tightening the tightening device to a predefined extent in a fifth step, and the cable ends (110) are spliced together by the attachment of a splicing device to the respective splicing regions (110") in a sixth step.

2. The method according to claim 1, **characterized in that** a phase cable having a core consisting of twisted steel strands surrounded by a sheath of twisted aluminum strands is provided as high-tension cable.

3. The method according to any one of the previous claims, **characterized in that** a squeeze connector (120) is provided as splicing device.

4. The method according to any one or more of the previous claims, **characterized in that** a cable stocking (150) made of a metal mesh is provided as temporary connecting device.

5. The method according to any one or more of the previous claims, **characterized in that** a working clamp (130) encompassing a portion of the fastening region (110") of a cable end (110) is provided as fastening device.

6. The method according to any one or more of the previous claims, **characterized in that** a come-along tool (140) (BKS) is provided as tightening device.

7. The method according to any one or more of the previous claims, **characterized in that** the suspended high-tension cable is held taught and is freely suspended.

8. The method according to claim 7, **characterized in that** the splicing operation is carried out in situ, in the vicinity of the suspended cable, from a cart serving as a working platform supported by two other cables.

9. The method according to claim 8, **characterized in that** each of the persons in the cart performing the splicing operation is secured by a safety cable attached to their body, the end of said cable remote from their body being attached to a roller device mounted for displacement along one of the two additional cables.

## Revendications

1. Procédé de jonction d'extrémités de câbles (110) haute tension suspendus à des pylônes d'arrêt, procédé dans lequel les extrémités de câbles (110) devant être jointes entre elles doivent être jointes entre elles de façon non détachable au moyen d'un dispositif d'épissure, deux extrémités de câbles (110) reliées entre elles par un dispositif de jonction provisoire étant subdivisées en une zone d'épissure (110') directement contiguë à une face frontale d'une extrémité de câble (110), zone destinée à placer un dispositif d'épissure, et en une zone de fixation (110") voisine de la zone d'épissure, zone destinée à placer un dispositif de fixation, **caractérisé par le fait que** deux dispositifs de fixation affectés l'un à l'autre sont joints entre eux par l'intermédiaire d'un dispositif de serrage lors d'une première étape, que respectivement un des dispositifs de fixation joints entre eux est fixé sur la zone de fixation (110") de chaque extrémité de câble (110) lors d'une deuxième étape, que le dispositif de jonction provisoire est soulagé à un degré prédéterminé par serrage du dispositif de serrage lors d'une troisième étape, que le dispositif de jonction provisoire est libéré et enlevé des extrémités de câbles (110) lors d'une quatrième étape, que la distance entre les deux extrémités de câbles (110) se faisant face est réduite à un degré prédéterminé par un nouveau serrage du dispositif de serrage lors d'une cinquième étape, et que les extrémités de câbles (110) sont épissées entre elles par mise en place d'un dispositif d'épissure sur les zones d'épissure (110') respectives lors d'une sixième étape.

2. Procédé selon la revendication 1, **caractérisé par le fait qu'**un câble de phase dont l'âme est constituée de câbles d'acier vrillés et est entourée d'une gaine en câbles d'aluminium vrillés est prévu en tant que câble haute tension.

3. Procédé selon l'une des revendications précédentes, **caractérisé par le fait qu'**un connecteur par pressage (120) est prévu en tant que dispositif d'épissure.

4. Procédé selon l'une ou plusieurs des revendications précédentes, **caractérisé par le fait qu'**un tire-câble (150) en tresse d'acier est prévu en tant que dispositif provisoire de jonction.

5. Procédé selon l'une ou plusieurs des revendications précédentes, **caractérisé par le fait qu'**une borne de travail (130) embrassant une partie de la zone de fixation (110") d'une extrémité de câble (110) est prévue en tant que dispositif de fixation.

6. Procédé selon l'une ou plusieurs des revendications précédentes, **caractérisé par le fait qu'**un palan à chaîne (140) (BKS) est prévu en tant que dispositif de serrage.

7. Procédé selon l'une ou plusieurs des revendications précédentes, **caractérisé par le fait que** le câble haute tension suspendu est soumis à des charges de traction tout en étant librement suspendu.

8. Procédé selon la revendication 7, **caractérisé par le fait que** l'opération d'épissure est effectuée sur place dans le voisinage du câble suspendu, à partir d'un chariot porté par deux autres câbles.

9. Procédé selon la revendication 8, **caractérisé par le fait que** les personnes se trouvant dans le chariot à partir duquel elles exécutent l'opération d'épissure sont respectivement mises en sécurité par une corde de sécurité attachée à leur corps, corde dont l'extrémité éloignée par rapport au corps est attachée à un dispositif de rouleaux pouvant se déplacer le long de l'un des deux autres câbles.
